# EUROPEAN PATENT APPLICATION

(11) **EP 1 736 330 A2**
(43) Date of publication of application: **27.12.2006**
(21) Application number: 06001648.2
(22) Date of filing: 26.01.2006
(51) Int. Cl.: B60C 27/20, A47L 9/00

(54) **Robot cleaner with slip preventing means on the tires**

(30) Priority: 17.05.2005 KR 2005041337
(71) Applicant: LG ELECTRONICS INC., Seoul 150-875 (KR)
(72) Inventor: Im, Hyoung-Deuk, Seodaemun-gu Seoul (KR); Baek, Oh-Hyun, Geumcheon-Gu Seoul (KR)
(74) Representative: Vossius & Partner

(57) **Abstract**

A robot cleaner (7) comprising a cleaner main body (10), a wheel (20) rotatably coupled to the cleaner main body (10), a tire (30) coupled to an outer circumferential surface of the wheel (20), and a slide-preventing plate (140) removable coupled to an outer circumferential surface of the tire (30), whereby the slide-preventing plate (140) allows the robot cleaner (7) to easily move without being slid so as to prevent unwanted power consumption, thereby preventing a position error caused by the sliding of the robot cleaner (7).

## Description

The present invention relates to a robot cleaner, and particularly, to a robot cleaner that is prevented from being slid.

In general, a robot cleaner serves to sense an area to be cleaned and obstacles using a sensor according to a command from a control unit, to automatically clean up the area to be cleaned by moving therearound, to move to a charging device which is separately disposed at a particular position for charging when power of a battery provided in the cleaner is completely consumed, and to return to the area where it was cleaning after completely charging the battery for cleaning up the area.

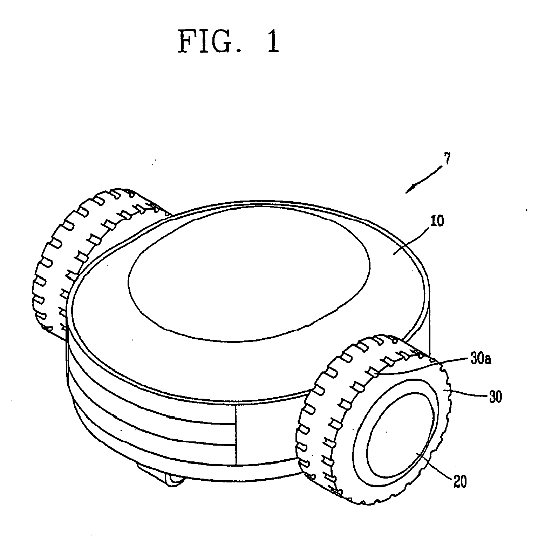

Fig. 1 is a schematic diagram showing an exemplary construction of a conventional art robot cleaner. As shown in Fig. 1, a conventional art robot cleaner 7 may include a cleaner main body 10 for sucking and removing dust or foreign materials on a floor, a wheel 20 rotatably coupled to each lateral surface of the cleaner main body 10 and driven by a motor (not shown) for a movement thereof, and a tire 30 coupled to each wheel 20 and having grooves 30a at an outer circumferential surface thereof.

An operation of the conventional art robot cleaner having such construction will now be explained.

Upon turning on the robot cleaner 7, the wheels 20 are driven by the motor, and the robot cleaner 7 moves around the area to be cleaned by a frictional force generated between the tire 30 coupled to the outer circumferential surface of the wheel 20 and the floor. While the robot cleaner 7 moves around the area to be cleaned, dust or foreign materials on the floor are sucked through a suction head (not shown) by a suction force of a fan motor (not shown) to be collected in a filter (not shown).

When the conventional art robot cleaner 7 moved on a slippery floor, however, the tire 30 was slid on the floor to thus run idle, which caused an unwanted power consumption. Furthermore, a position error due to the sliding of the robot cleaner 7 occurred. A skid mark also remained on the floor and noise was generated between the outer circumferential surface of the tire 30 and the floor.

Moreover, while the robot cleaner 7 performed the cleaning, the dust or foreign materials on the floor were stuck in the grooves 30a formed at the outer circumferential surface of the tire 30 to make the tire 30 be dirty. Upon washing the dirty tire 30, water was permeated into the main body 10 to thereby cause breakdown of components disposed in the main body 10.

Therefore, an object of the present invention is to provide a robot cleaner such that a sliding thereof can be prevented, noise generated between a tire and a floor can be prevented, a skid mark by the tire may not remain on the floor, and dust or the like stuck in an outer circumferential surface of the tire can easily be removed.

To achieve these and other advantages and in accordance with the purpose of the present invention, as embodied and broadly described herein, there is provided a robot cleaner comprising a cleaner main body, a wheel rotatably coupled to each lateral surface of the cleaner main body, a tire coupled to an outer circumferential surface of the wheel, and a slide-preventing plate removably coupled to an outer circumferential surface of the tire.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a schematic view showing a conventional art robot cleaner;
Fig. 2 is a schematic view showing an exemplary robot cleaner provided with a slide-preventing plate in accordance with an embodiment of the present invention;
Fig. 3 is a view showing a tire and a slide-preventing plate separated from the tire shown in Fig. 2;
Fig. 4 is a sectional view taken along a line IV-IV of Fig. 2;
Fig. 5 is a view showing two slide-preventing plates shown in Fig. 2 disposed at an outer circumferential surface of the tire; and
Fig. 6 is a view showing the plurality of the slide-preventing plates shown in Fig. 2 connected to one another by a connection member to thus be disposed at the outer circumferential surface of the tire.

Reference will now be made in detail to the preferred embodiments of the present invention, examples of which are illustrated in the accompanying drawings.

A robot cleaner provided with a slide-preventing plate in accordance with an embodiment of the present invention will now be explained in detail with reference to the accompanying drawings. The same reference numerals are provided for the same parts and components as those in the aforementioned and illustrated construction, and the explanation therefor will thus be omitted.

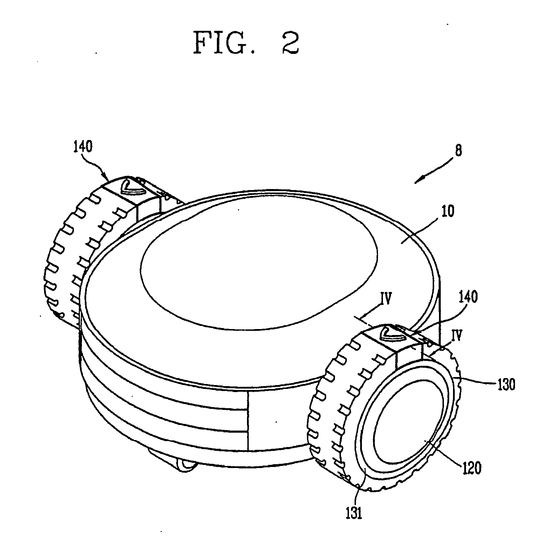

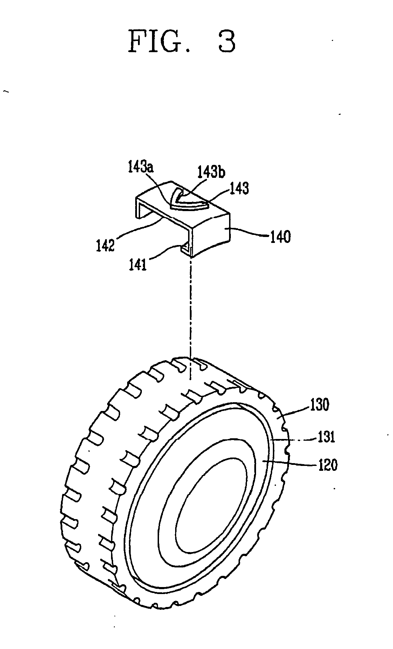

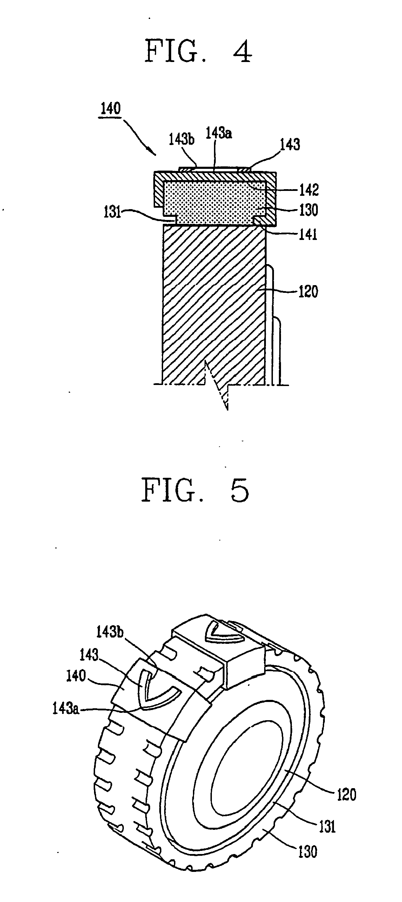

Fig. 2 is a schematic view showing an exemplary robot cleaner provided with a slide-preventing plate in accordance with an embodiment of the present invention, Fig. 3 is a view showing a tire and a slide-preventing plate separated from the tire shown in Fig. 2, and Fig. 4 is a sectional view taken along a line IV-IV of Fig. 2.

As shown in Fig. 2, a robot cleaner 8 provided with a slide-preventing plate in accordance with an embodiment of the present invention may include: a cleaner main body 10 for sucking and removing dust or foreign materials from a floor, a wheel 120 rotatably coupled to each lateral surface of the cleaner main body 10 and driven for a movement of the cleaner 8, a tire 130 coupled to an outer circumferential surface of the wheel 120, and a slide-preventing plate 140 removably coupled to the outer circumferential surface of the tire 130.

Referring to Figs. 3 and 4, the slide-preventing plate 140 may include an accommodating portion 142 having a shape of "⊏" and covering the outer circumferential surface of the tire 130 in a width direction thereof, and a fixing protrusion 141 extending inwardly from an end portion of the accommodating portion 142 and inserted in a gap 131 between the tire 130 and the wheel 120 so as to prevent the slide-preventing plate 140 from being easily separated from the tire 130 upon the movement of the robot cleaner 8.

One fixing protrusion 141 may be formed at one end portion of the accommodating portion 142 as shown in Fig. 4, or at both end portions of the accommodating portion 142.

A protruding portion 143 having a shape of "V" is formed at an upper surface of the accommodating portion 142. The protruding portion 143, if necessary, can be changed into various shapes such as "U", "T", and the like. The protruding portion 143 allows minimizing of a contact area between the tire 130 and the floor to thus reduce noise generated while the slide-preventing plate 140 comes in contact with the floor.

The slide-preventing plate 140 is formed of a viscoelastic material such as rubber in order to increase a frictional force with the floor and to reduce noise.

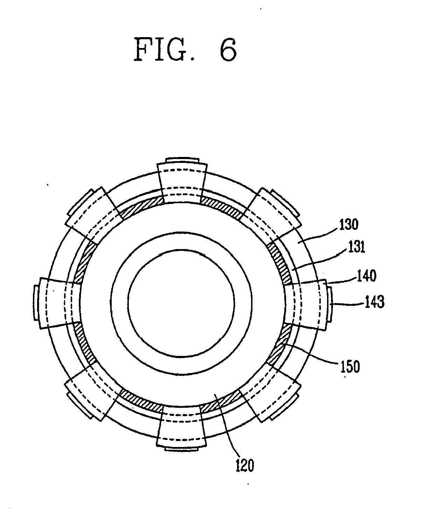

Fig. 5 is a view showing two slide-preventing plates shown in Fig. 2 disposed at an outer circumferential surface of the tire, and Fig. 6 is a view showing the plurality of the slide-preventing plates shown in Fig. 2 connected to one another by a connection member to thus be disposed at the outer circumferential surface of the tire.

As shown in Fig. 5, two slide-preventing plates 140 are disposed at the outer circumferential surface of the tire 130 to increase a frictional force between the tire 130 and the floor, and to reduce noise more effectively.

As shown in Fig. 6, a plurality of the slide-preventing plate 140, if necessary, are connected to one another by the connection member 150 to thus be disposed at the outer circumferential surface of the tire 130. At this time, in order to minimize jounce while the robot cleaner 8 moves, the plurality of slide-preventing plates 140 are preferably connected to one another by the connection member 150 with a uniform interval therebetween.

When the plurality of slide-preventing plates 140 are connected to one another by the connection member 150 to thus be disposed at the outer circumferential surface of the tire 130, it is convenient to mount a plurality of the connection members 150 at the tire 130 at the same time, as a snow chain is mounted at a vehicle tire.

Hereinafter, an operation of the robot cleaner having the slide-preventing plate will now be explained with reference to Figs. 2 to 5.

When the robot cleaner is used to clean the slippery floor, first, the fixing protrusion 141 of the slide-preventing plate 140 is inserted in the gap 131 between the tire 130 and the wheel 120, and the accommodating portion 142 of the slide-preventing plate 140 is coupled to the tire 130 to cover the outer circumferential surface of the tire 130 in its width direction.

Next, upon applying power to the robot cleaner 8, the wheel 120 rotates and the tire 130 to which the slide-preventing plate 140 is coupled rotates in response to the rotation of the wheel 120. Accordingly, the robot cleaner 8 moves around an area to be cleaned to suck foreign materials and dust or the like from the floor, thereby performing the cleaning operation.

At this time, since the side-preventing plate 140 is coupled to the outer circumferential surface of the tire 130, the tire 130 is prevented from being slid on the floor, and unexpected stains or skid marks may not remain. A pointed part 143a of the shape of "V" firstly comes in contact with the floor, and thus noise generated between the tire 130 and the floor can be reduced.

In addition, as the slide-preventing plate 140 is removably coupled to the outer circumferential surface of the tire 130, only the slide-preventing plate 140 can be separated from the tire 130 after completely cleaning up the floor. Accordingly, it is possible to wash out the dust or foreign materials stuck in a gap 143b formed in the protruding portion 143 having the shape of "V" of the slide-preventing plate 140.

The robot cleaner provided with the slide-preventing plate according to the embodiment of the present invention as aforementioned will have several effects as follows.

First, the slide-preventing plate allows the robot cleaner to easily move without being slid so as to prevent unwanted power consumption, thereby preventing a position error caused by the sliding of the robot cleaner.

Second, the slide-preventing plate formed of the viscoelastic material and the protruding portion having the shape of "V" formed at the slide-preventing plate allows reducing of the noise generated between the tire and the floor, thereby improving a cleaning environment.

Third, the skid mark or the like does not remain on the floor to thus prevent the floor from being dirty.

Fourth, only the slide-preventing plate can be separated from the tire so as to easily remove dust or foreign materials of the floor which are stuck in the slide-preventing plate. Accordingly, it is not required to clean the whole robot cleaner in order to wash the dirty tire, and thus components installed in the robot cleaner can be prevented from being broken down due to water permeated into the robot cleaner.

## Claims

1. In a robot cleaner having a cleaner main body, a wheel rotatably coupled to the cleaner main body to thereby be driven, and a tire coupled to an outer circumferential surface of the wheel, wherein a slide-preventing plate is removably coupled to an outer circumferential surface of the tire.

2. The slide-preventing plate of claim 1, wherein the slide-preventing plate includes:
an accommodating portion for covering the outer circumferential surface of the tire in a width direction thereof; and
a fixing protrusion extending inwardly from an end portion of the accommodating portion and inserted in a gap between the tire and the wheel.

3. The slide-preventing plate of claim 2, wherein the fixing protrusion is formed at both end portions of the accommodating portion.

4. The slide-preventing plate of claim 2, wherein a protruding portion is formed at an upper surface of the accommodating portion.

5. The slide-preventing plate any of claims 1 to 4, wherein the slide-preventing plate is formed of a viscoelastic material.

6. A robot cleaner comprising:
a cleaner main body;
a wheel rotatably coupled to each lateral surface of the cleaner main body; a tire coupled to an outer circumferential surface of the wheel; and
a slide-preventing plate removably coupled to an outer circumferential surface of the tire.

7. The robot cleaner of claim 6, wherein the slide-preventing plate includes:
an accommodating portion for covering the outer circumferential surface of the tire in a width direction thereof; and
a fixing protrusion extending inwardly from an end portion of the accommodating portion 1 and inserted in a gap between the tire and the wheel.

8. The robot cleaner of claim 7, wherein a protruding portion is formed at an upper surface of the accommodating portion.

9. The robot cleaner of claim 6 or 7, wherein the slide-preventing plate is disposed in plurality along the outer circumferential surface of the tire.

10. The robot cleaner of claim 6, wherein a plurality of the slide-preventing plates are connected to one another by a connection member to be disposed at the outer circumferential surface of the tire.
